# EUROPÄISCHE PATENTSCHRIFT

(11) **EP 0 250 573 B1**
(45) Veröffentlichungstag und Bekanntmachung des Hinweises auf die Patenterteilung: **21.04.1993**
(21) Anmeldenummer: 87900628.6
(22) Anmeldetag: 05.01.1987
(51) Int. Cl.: E04C 5/07, E04C 5/01, C04B 20/00, G21F 1/04

(54) **EIN AUS ZEMENT, ZUSCHLAGSSTOFFEN UND WASSER BESTEHENDER, ZUGFESTER BETON**
A TENSION-RESISTING CONCRETE CONSISTING OF CEMENT, AGGREGATE AND WATER
BETON RESISTANT A LA TRACTION SE COMPOSANT DE CIMENT, D'AGREGATS ET D'EAU

(30) Priorität: 14.01.1986 CH 93/86; 14.01.1986 CH 94/86
(43) Veröffentlichungstag der Anmeldung: 07.01.1988
(73) Patentinhaber: Nill, Werner, CH-8400 Winterthur (CH)
(72) Erfinder: NILL, Walter, CH-8404 Winterthur (CH)
(74) Vertreter: Gachnang, Hans Rudolf
(86) Internationale Anmeldenummer: CH8700001
(87) Internationale Veröffentlichungsnummer: WO8704208

(56) Entgegenhaltungen:
- WO-A-80/01179
- CH-A- 338 590
- DE-A- 2 305 651
- DE-A- 2 900 710
- FR-A- 727 802
- FR-A- 980 329
- FR-A- 1 366 610
- GB-A- 252 975
- GB-A- 515 003
- US-A- 3 400 507

## Beschreibung

Die Erfindung betrifft einen aus Zement, Betonkies, Zuschlagsstoffen und Wasser bestehenden Beton gemäss Oberbegriff des Anspruches 1.

Unbewehrter Beton hat eine hohe Druckfestigkeit, aber eine relativ kleine Zugfestigkeit, die in der Grössenordnung von etwa 10% der Druckfestigkeit liegt. Zur Erhöhung der Zugfestigkeit in Bauten, wie Tragkonstruktionen, Säulenkörpern, Decken usw., ist es bekannt, Stahlbeton zu verwenden, wobei vom Beton die Druckspannungen und von der Bewehrung die Zugspannungen und grössere Schub- und Scherspannungen aufgenommen werden.

Die US-A-3,400,507 betrifft ein stabförmiges Armierungselement mit einem auf diesem aufgeschobenen Auftriebskörper. Durch den aus einem "leichten" Material, z.B. Schaumstoff, bestehenden Auftriebskörper wird einerseits die Dichte des Armierungselementes derjenigen des rohen Betons angenähert, andererseits wird aber die Verbindung mit dem Beton gravierend verschlechtert und damit dessen Festigkeit als Ganzes verringert. Im weiteren weist das Armierungselement keine Mittel zur Erhöhung der Zugfestigkeit des Betons auf.

Es wurde schon versucht, dem Beton dünne Drähte oder Stahlfasern beizumischen, um seine Zugfestigkeit unter umgehung der üblichen Bewehrung zu erhöhen (VDI Nachrichten, Nr. 22/76, S. 3, australische Patentschrift 290 468 sowie US-Patentschrift 3 650 785). Diese Versuche waren aber nicht mit Erfolg beschieden, da sich die Drähte beim Mischen unter dem Einfluss der Schwer- und Zentrifugalkraft örtlich konzentrierten und die gewünschte gleichmässige Verteilung nicht erzielt werden konnte.

Ausgehend von der US-A-3,400,507 besteht die Aufgabe der Erfindung darin, ein Armierungselement zu schaffen, das sich beim Mischen des Betons beifügen lässt und gemäss den Regeln des Zufalls in der Masse des Betons verteilt wird und das eine Erhöhung der Zugfestigkeit des Betons bewirkt. Schliesslich wäre es wünschbar, neben der Erhöhung der Zugfestigkeit weitere physikalische Eigenschaften des Betons, insbesondere hinsichtlich der Auswirkungen von kernphysikalischen Vorgängen, wie Strahlungen, der Durchlässigkeit von Strahlen, auf einfache Weise durch eine entsprechend Ausbildung der Armierungselemente beeinflussen zu können.

Diese Aufgabe wird gemäss den kennzeichnenden Merkmalen des Patentanspruches 1 gelöst.

Durch die Zumischung von verschieden dimensionierten Armierungselementen zum Beton, deren prozentuale Aufteilung der prozentualen Aufteilung der im Beton vorhandenen Anteile verschiedener Körner entspricht, z.B. entsprechend der Siebkurve nach SIA (Schweizer Norm) und deren Radien an den Endbereichen unterschiedliche Dimensionen aufweisen, die den Korndurchmessern der Körner im Beton entsprechen, kann eine wesentliche Erhöhung der Festigkeit erreicht werden Nachfolgend werden anhand der Zeichnungen Ausführungsbeispiele der Erfindung näher erläutert. Es zeigen:
- Figur 1: ein Armierungselement, welches als Zuschlagsstoff Bestandteil des Betons ist,
- Figur 2a-2c: einen Querschnitt durch das Armierungselement gemäss Figur 1,
- Figur 3: einen Schnitt durch ein Betongefüge mit in zufallswahrscheinlicher Orientierung darin verankerten Armierungselementen und
- Figur 4a+4b: verschiedene Ausbildungen weiterer Armierungselemente und
Beton ist ein künstliches Konglomerat, bestehend aus Kies, Zement, Zuschlagsstoffen, Wasser und gegebenenfalls weiteren Zusätzen. Bei Schwerstbeton mit einer Rohdichte von 3 - 5 kg/dm³ können die Zuschlagsstoffe Schwerspat, Magnetit und Stahlschrot sein, wobei sich die Zuschlagsstoffe mit hoher Dichte häufig entmischen. Beim üblicherweise verwendeten Baubeton mit Sand, Kies, Splitt und Zuschlägen beträgt die Rohdichte etwa 1,8 - 2,8 kg/dm³. Der prozentuale Anteil der verschiedenen Körnungen der Zuschlagsstoffe, die von sehr fein bis sehr grob reichen können, wird durch den Verwendungszweck bestimmt.

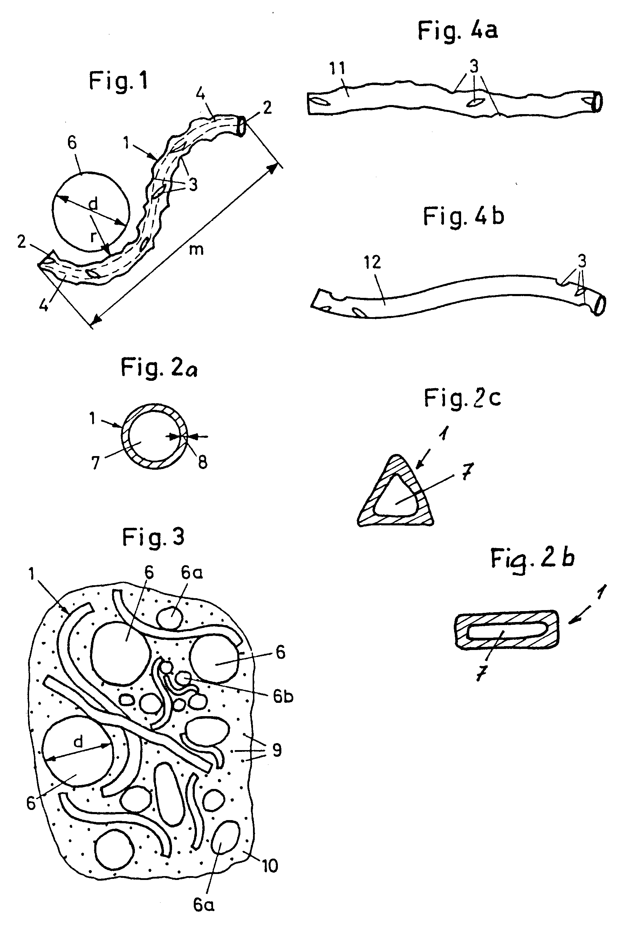

Das in Figur 1 dargestellte Armierungselement besteht aus einem zugfesten Rohrstück 1, welches dicht verschlossen ist. Um eine gute Haftung im Betongefüge zu erzielen, ist die Oberfläche rauh und mit Kerben 3 oder Einbuchtungen versehen. Die Oberfläche könnte auch in bekannter Weise mit Querrippen und/oder verdrillten Längsrippen ausgerüstet sein.

Die Armierungselemente sind gerade, ganz oder teilweise in der Ebene oder räumlich gebogen, so dass das im Gefüge verankerte Element nicht gestreckt werden kann und voll auf Zug belastbar ist, ohne im Gefüge zu gleiten.

Zweckmässigerweise ist das Armierungselement ganz oder teilweise wendelförmig ausgebildet, wobei der Biegungswinkel nicht zu stark sein darf, da sich sonst die Elemente gegenseitig verkrallen und verhaken würden. Dadurch würde eine gleichmässige Verteilung im Betongemisch nicht möglich. Das Element sollte auch nicht flächeneben sein. Der Biegeradius r der Elemente ist den jeweils zu verbindenden verschiedenen Korngrössen entsprechend angepasst, wobei an einem Element zwei verschiedene Radien vorgesehen sein können, um zwei unterschiedlich grosse Körner miteinander verbinden zu können.

Der Beton lässt sich problemlos den gestellten konstruktiven Festigkeitsanforderungen anpassen, indem der Anteil der Armierungselemente verhältnismässig dazu gewählt wird. Durch schichtweises Einbringen der unterschiedlichen Betongemische können sogar unterschiedliche Zugfestigkeiten an verschiedenen Stellen des Baukörpers erzielt werden. Auf diese Weise sind selektive Festigkeiten erreichbar, die durch konventionelle Armierungen gar nicht erhalten werden können. So kann z.B. die Zugfestigkeit eines Stützenkopfes oben grösser sein als unten.

Obwohl die bevorzugte Verwendung des erfindungsgemässen Betons darin besteht, den bekannten Stahlbeton mit den mühsam von Hand montierten Bewehrungen zu ersetzen, kann er auch für besonders hohe Festigkeitsanforderungen zusammen mit einer konventionellen Bewehrung verwendet werden, um die Festigkeit noch weiter zu erhöhen.

Es hat sich in Versuchen als zweckmässig erwiesen, die Länge m des Armierungselementes 1 so zu wählen, dass sie dem zwei- bis fünffachen Durchmesser d des zur Verbindung herangezogenen Kornes 6 entspricht. Der Biegeradius r sollte mindestens so gross sein wie der Wölbungsradius dieses Kornes 6. Dadurch wird eine teilweise Umschlingung des Kornes 6 durch das Armierungselement 1 erreicht, wodurch eine ausgezeichnete Verankerung des Elementes 1 und zusätzlich zu der Haftung ein Formschluss erzielt wird.

Bei einem Korndurchmesser von beispielsweise beidseitig 30 mm könnte die Länge des Armierungselementes z.B. 80 mm betragen.

Um die richtige Dichte des Armierungselementes 1 zu erhalten, müssen in Abhängigkeit der Dichte des verwendeten Materials und des Durchmessers d der Hohlraum 7 und die Wandstärke 8 entsprechend gewählt werden. Die verlangte Dichte ist je nach verwendeter Betonsorte verschieden. Auch sind Füllungsmaterialien, z.B. Schaumstoff, auf die später noch näher hingewiesen wird, zu berücksichtigen. Folgende Fälle sind denkbar:
a) Wenn das Elementmaterial schwerer als der Beton ist, z.B. Stahl, müssen Hohlraumanteile vorhanden sein; ist das Füllmaterial schwerer als der Beton, so muss dies durch den Füllungskoeffizienten ausgeglichen werden.
b) Wenn das Elementmaterial gleich schwer wie der Beton ist, kann das Element voll ausgebildet werden, u.B. als Zuschlagstoffmaterial selbst.
c) Bei einem Elementmaterial, das leichter als Beton ist, muss das Füllmaterial schwerer als Beton sein.
d) Der Körper, die Füllung und/oder ein Überzug können aus physikalisch aktiven Stoffen, z.B. Parafin, Blei, Cadmium, Graphit, Zirkon, Kobalt, Wolfram etc. bestehen.

Bei dem in Figur 3 dargestellten erhärteten Betongefüge sind die feinen Zuschlagsstoffe mit 9 und dar Zement mit 10 bezeichnet. Die Kies- und Splitteile als Körnung sind mit 6, 6a, 6b bezeichnet. Die Armierungselemente 1 sind räumlich in durch die Wahrscheinlichkeit sich ergebender Orientierung angeordnet, was dem Beton die verlangte hohe Zugfestigkeit in allen Richtungen verleiht. Auch die Schub- und Druckfestigkeit ist höher als beim Beton ohne Armierungselemente.

Die Armierungselemente 1 können alle gleich ausgebildet sein oder auch nach den zu erfassenden Körnungsanteilen angepasst sein, z.B. verschieden lang und mit unterschiedlichen Radien r. In den Figuren 4a & 4b sind zwei mögliche Formen der Armierungselemente abgebildet. Das Element 11 gemäss Figur 4a ist rundum mit Kerben 3 versehen und haftet einwandfrei auf der ganzen Länge, währenddem das Element 12 (Figur 4b) nur an den Enden Kerben 3 aufweist.

Die Querschnitte der Elemente können beliebige geometrische Formen von entlang des Elementes wechselnder Grösse aufweisen, wobei dadurch auch die Hohlräume beeinflussbar sind.

Die besten Werte werden erzielt, wenn die unterschiedlich grossen Armierungselemente dem Beton in prozentual gleicher Verteilung beigefügt werden wie die unterschiedlich grossen Grobkörner, so dass sich entsprechende Paarungen ergeben können.

Um Korrosionsstellen oder an der Oberfläche des Baukörpers sichtbare Stellen zu vermeiden, wäre es zweckmassig, für die Armierungselemente rostfreien Stahl zu verwenden, oder die Elemente mindestens äusserlich mit einer rostfreien Oberfläche zu versehen. Wie bereits erwähnt worden ist, sollten die Elemente nicht flächeneben sein, damit sie auch nicht in ihrer ganzen Länge an der Schalung aufliegen und die Berührungsstellen mit der Schalung möglichst klein sein, um die späteren Sichtflecken in der Betonoberfläche minimal zu halten.

Stahl als Material für die Armierungselemente wird bevorzugt, weil dessen Wärmedehnung annähernd gleich gross ist wie diejenige des Betons und weil Stahl eine hohe Zug- und Druckfestigkeit aufweist. Die Druckfestigkeit des Armierungselementes sollte mindestens der Druckfestigkeit des Betons (ca. 200 - 600 kg/cm²) entsprechen, sonst könnte das Element im Beton zusammengedrückt werden. Diese Bedingung wird durch zweckmässige Wahl der Abmessung und der Wandstärke berücksichtigt.

Durch geeignete Materialwahl des Armierungselementes, unter Berücksichtigung möglicher Legieranteile und der Hohlraumfüllung, können neben der Festigkeit auch Änderungen der physikalischen Eigenschaften des Betons hervorgebracht werden. Ein Kupfer- oder Aluminiumanteil würde die Wärmeleitfähigkeit erhöhen, was z.B. im Kühlturmbau sehr erwünscht ist. Andere Materialien, wie Bor, Blei usw., wären im Reaktorbau vorteilhaft, um das kern- oder atomphysikalische Verhalten des Betons (Absorbtion von Strahlen), insbesondere im Reaktorbau, in militärischen Objekten in Schutzräumen, medizinischen Untersuchungsräumen usw., zu verändern. Diese Materialien kommen als Werkstoff des Elementes wie auch als Teil- oder Vollfüllung desselben in Frage.

Bisher wurden hauptsächlich als Hohlkörper ausgebildete Armierungselemente erwähnt. Es ist aber auch möglich, ein volles Armierungselement aus Kunststoff mit einem Stahlkern zu verwenden.

## Patentansprüche

1. Aus Zement, Kies, Zuschlagsstoffen und Wasser bestehender Beton mit länglichen zugfesten Armierungselementen (1,11,12), deren Dichte annähernd der Dichte des Betons entspricht, dadurch gekennzeichnet, dass die Armierungselemente (1,11,12) bezüglich Länge, Durchmesser und Biegeradien der Endbereiche (4) unterschiedliche Dimensionen aufweisen, dass die Biegeradien der Endbereiche (4) der verschiedenen Armierungselemente (1,11,12) dem Korndurchmesser der verschiedenen Zuschlagsstoffe entsprechen und dass der prozentuale Anteil der unterschiedlich dimensionierten Armierungselemente (1,11,12) im wesentlichen dem prozentualen Anteil der im Beton vorliegenden verschiedenen Korndurchmessern entspricht.

2. Beton nach Anspruch 1, dadurch gekennzeichnet, dass die Oberflächen der Armierungselemente (1,11,12,17) rauh sind und/oder Kerben (3), Querrippen oder verdrillte Längsrippen aufweisen.

3. Beton nach Anspruch 1, dadurch gekennzeichnet, dass die Länge (m) der Armierungselemente (1,11,12,17) mindestens dem zweifachen Durchmesser (d) des Kornes (6) entspricht.

4. Beton nach Anspruch 1, dadurch gekennzeichnet, dass die Radien an den Enden gleich sind.

5. Beton nach Anspruch 1, dadurch gekennzeichnet, dass die Radien an den Enden verschieden sind.

6. Beton nach einem der Ansprüche 1 bis 5, dadurch gekennzeichnet, dass das Armierungselement (1,11,12,17) aus einem Kernteil und einer nichtrostenden Umhüllung besteht.

7. Beton nach einem der Ansprüche 1 bis 6, dadurch gekennzeichnet, dass die Armierungselemente Hohlräume (7) aufweisen, die mindestens teilweise mit einem Material gefüllt oder mit einem Material überzogen sind, welches die kern- oder atomphysikalischen Eigenschaften des Betons verändert oder in eine Wechselwirkung mit durchdringenden Einflüssen tritt.

## Claims

1. A concrete, consisting of cement, gravel, aggregates and water with longitudinal tension proof reinforcement elements (1, 11, 12) the thickness of which approximately corresponds to the density of the concrete, characterized in that the reinforcement elements (1, 11, 12) have different dimensions relative to length, diameter and bending radii of the end areas (4), that the bending radii of the different end areas (4) of the different reinforcement elements (1, 11, 12) are in conformity with the core diameters of the different aggregates and that the percentage component of the differently dimensioned reinforcement elements (1, 11, 12) corresponds substantially to the different core diameters present in the percentage component of the different core diameters in the concrete.

2. Concrete according to Claim 1, characterized in that the surfaces of the reinforcement elements (1, 11, 12, 17) are rough and/or have grooves (3), transverse ribs or twisted longitudinal ribs.

3. Concrete according to Claim 1, characterized in that the length (m) of the reinforcement elements (1, 11, 12, 17) corresponds to at least twice the diameter (d) of the core diameter. (6).

4. Concrete according to Claim 1, characterized in that the radii on the ends are the same.

5. Concrete according to Claim 1, characterized in that the radii on the ends are different.

6. Concrete according one of the Claims 1 to 5, characterized in that the reinforcement element (1, 11, 12, 17) consists of a core component and a non-rusting covering.

7. Concrete according one of the Claims 1 to 6, characterized in that the reinforcement elements have a hollow space (7) which is at least partly filled with a material or is covered with a material which changes the nuclear physical characteristics of the concrete or which appears in a reciprocal reaction with penetrating influences.

## Revendications

1. Béton formé de ciment, de gravier, d'additifs et d'eau et comportant des éléments allongés (1, 11, 12) pour armer le béton qui résistent à la traction et ont une densité proche de celle du béton, caractérisé en ce que les éléments (1, 11, 12) pour armer le béton ont des dimensions variables en ce qui concerne leur longueur, leur diamètre et les rayons de courbure de leurs parties extrêmes (4), en ce que les rayons de courbure des parties extrêmes (4) des différents éléments (1, 11, 12) pour armer le béton correspondent au diamètre des grains constituant les différents additifs et en ce que les pourcentages, par classes de dimensions, des éléments (1, 11, 12) pour armer le béton correspondent sensiblement aux pourcentages, par classes de diamètres, des grains présents dans le béton.

2. Béton selon la revendication 1, caractérisé en ce que la surface des éléments (1, 11, 12, 17) pour armer le béton est rugueuse et/ou comporte des entailles (3), des nervures transversales ou des nervures longitudinales formant des torsades.

3. Béton selon la revendication 1, caractérisé en ce que la longueur (m) de l'élément (1, 11, 12, 17) pour armer le béton est au moins le double du diamètre (d) du grain (6).

4. Béton selon la revendication 1, caractérisé en ce que les rayons des extrémités sont identiques.

5. Béton selon la revendication 1, caractérisé en ce que les rayons des extrémités sont variables.

6. Béton selon l'une des revendications 1 à 5, caractérisé en ce que l'élément (1, 11, 12, 17) pour armer le béton est formé d'un noyau et d'une enveloppe inoxydable.

7. Béton selon l'une des revendications 1 à 6, caractérisé en ce que des éléments pour armer le béton présentent des cavités (7) au moins en partie remplies ou recouvertes d'un matériau qui modifie les propriétés du béton dans le domaine nucléaire ou atomique ou qui interagit avec des phénomènes physiques traversant le béton.
